(19) **Europäisches Patentamt**

**European Patent Office**

**Office européen des brevets**

(11) **EP 1 217 352 A1**

(12) **EUROPÄISCHE PATENTANMELDUNG**

(43) Veröffentlichungstag:
26.06.2002 Patentblatt 2002/26

(51) Int Cl.⁷: **G01M 3/28**

(21) Anmeldenummer: 00127903.3

(22) Anmeldetag: **20.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB PATENT GmbH**
**68309 Mannheim (DE)**

(72) Erfinder:
• **Krieger, Jürgen**
**31675 Bückeburg (DE)**

• **Karte, Thomas Dr.,**
**Schillerstrasse 72 32425 Minden (DE)**
• **Elting, Andreas**
**30159 Hannover (DE)**

(74) Vertreter: **Schmidt, Karl Michael, Dipl.-Phys.**
**ABB Patent GmbH,**
**Patentstelle Heiligenhaus,**
**Postfach 10 02 51**
**42567 Heiligenhaus (DE)**

(54) **Verfahren und Einrichtung zur Ermittlung von Leckagen an der Dichtung eines Ventils**

(57)    Die Erfindung betrifft ein Verfahren sowie eine Einrichtung zur Ermittlung von Leckagen an der Dichtung eines Ventils bzw einer Ventilstange, insbesondere eines Prozessventiles, gemäß Oberbegriff des Patentansprüche 1 und 10. Um hierbei ein Verfahren sowie eine Einrichtung der gattungsgemäßen Art dahingehend weiterzubilden, daß eine Leckage im Ventilstangenbereich bei Prozessventilen zuverlässig und sicher erkannt werden kann, um sodann einen rechtzeitigen Hinweis zum Wechsel der Ventilstangendichtung zu erhalten, ist erfindungsgemäß vorgeschlagen, dass zur Ermittlung der Leckage der Druck ggfs in Abhängigkeit von der Zeit in einem Kontrollvolumen zwischen einer ersten und einer zweiten Ventilstangendichtung ermittelt und daraus der Leckagestrom berechnet wird.

Figur 4

**Beschreibung**

Die Erfindung betrifft ein Verfahren sowie eine Einrichtung zur Ermittlung von Leckagen an der Dichtung eines Ventils bzw einer Ventilstange, insbesondere eines Prozessventiles, gemäß Oberbegriff des Patentansprüche 1 und 10.

An verfahrenstechnischen Ventilen , d.h. an Prozessventilen werden die Durchführungen der Ventilstangen, die den Antrieb mit dem Ventilschieber verbinden, gemäß dem Stand der Technik mit Packungen verschiedenster Materialien und Ausführung oder mit Lippendichtungen abgedichtet.

Während der Einsatzzeit des Ventils können an den Packungen und Dichtungen Verschleißerscheinungen und oder Beschädigungen auftreten, die zu einer Undichtigkeit führen. Eine Undichtigkeit hat zur Folge, dass das Medium, welches durch das Prozessventil gesteuert wird, in die Umgebung austreten kann. Dieser unerwünschte Effekt wird als externe Leckage oder Leckage zur Umgebung hin bezeichnet.

In Abhängigkeit von den physikalischen und chemischen Eigenschaften des Mediums, von der Art der Anwendung sowie des Einsatzortes kann in gewissen Grenzen eine kontinuierliche Leckage zulässig sein. Bei anderen Anwendungen ist eine Leckage jeglicher Art möglichst zu unterbinden. Insbesondere bei brennbaren und explosiven Medien sowie bei toxischen oder schwer abbaubaren Substanzen können Leckagen verheerende Folgen für die Umwelt nach sich ziehen oder zu einer Gefährdung von Mensch und Anlagen führen. Bei wertvollen Stoffen ist auch der finanzielle Verlust durch Leckagen nicht zu vernachlässigen.

Der Erfindung liegt daher die Aufgabe zugrunde, ein Verfahren sowie eine Einrichtung der gattungsgemäßen Art dahingehend weiterzubilden, daß eine Leckage im Ventilstangenbereich bei Prozessventilen zuverlässig und sicher erkannt werden kann, um sodann einen rechtzeitigen Hinweis zum Wechsel der Ventilstangendichtung zu erhalten.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte verfahrensgemäße Ausgestaltungen sind in den abhängigen Ansprüchen 2 bis 9 angegeben.

Im Hinblick auf eine Einrichtung der gattungsgemäßen Art ist die Aufgabe erfindungsgemäß durch die kennzeichnenden Merkmale des Patentanspruches 10 gelöst.

Weitere vorteilhafte Ausgestaltungen sind in den übrigen abhängigen Ansprüchen angegeben.

Hinsichtlich des Verfahrens besteht der Kern der Erfindung darin,
dass zur Ermittlung der Leckage der Druck ggfs in Abhängigkeit von der Zeit in einem Kontrollvolumen zwischen einer ersten und einer zweiten Ventilstangendichtung ermittelt und daraus der Leckagestrom berechnet wird. Gegenüber einer bekannten Ventilbauart ist nunmehr der Ventilstangendichtung eine weitere Dichtung quasi nachgeschaltet. Jedoch nicht im Sinne einer redundanten Dichtungsauslegung im Sinne eines Dichtungspaketes, sondern zwischen der herkömmlichen und der zweiten Dichtung wird ein definiertes Kontrollvolumen geschaffen, was in der dargestellten Weise überwacht wird.

Eine einfache redundante Auslegung durch ein aus mehreren Dichtungen bestehendes Dichtungspaket, wie im Stand der Technik oftmals verwendet schafft zwar zeitlich begrenzt eine relativ gute Dichtwirkung, doch kann die Leckage als solche nicht detektiert werden. Im Gegensatz dazu schafft das erfindungsgemäße Verfahren eine sehr zuverlässige Möglichkeit der Ermittlung der Leckage und somit die Ermittlung des Zustandes der Dichtung.

In vorteilhafter Ausgestaltung ist angegeben,
dass aus dem Wert des Leckagestrom auf die Dichtigkeit der Dichtung geschlossen wird, und so ein Dichtungswechselzeitpunkt ermittelt wird.

Weiterhin ist vorteilhaft agegeben, dass das Kontrollvolumen diskontinuierlich geöffnet bzw entleert und dann wieder geschlossen und sodann der Druckanstieg im Kontrollvolumen gemessen wird. Auf diese Weise ist ein fester Ausgangspunkt reproduzierbar, von dem aus immer gemessen werden kann.

In weiterer Ausgestaltung ist das Kontrollvolumen druckbegrenzt wird, und bei einem oberen Druckwert wird es entleert, solange bis sich ein niedriger Schließdruck eingestellt hat.

Dabei kann das Kontrollvolumen über ein druckschalterbetätigtes Schaltventil entlüftet bzw. entleert werden, und sodann in Abhängigkeit zur Schließzeit, zum Druck im Kontrollvolumen und den Zustandsgleichungen des Arbeitsmittels ein Leckagestrom ermittelt werden.

Alternativ dazu kann so vorgegangen werden, dass ein oberer Druckwert und ein niedriger Schließdruck durch Druckschalter oder durch einen Drucksensor erfasst werden, und sodann in Abhängigkeit zur Schließzeit, zum Druck im Kontrollvolumen und den Zustandsgleichungen des Arbeitsmittels ein Leckagestrom ermittelt wird.

Vorteilhaft ist weiterhin, das Schaltventil über ein Steuerprogramm so anzusteuern, dass wenn ein Prüfungszyklus eingeleitet wird, die Einzelschritte des Prüfzyklusses automatisch ablaufen.

Der Prüfungszyklus enthält dann in vorteilhafter Weise folgende Schritte,

- Öffnen des Schaltventiles und Entlüftung des Kontrollvolumens,
- Verschließen des Kontrollvolumens und Start der Kontrollzeit,

- Ermittlung eines Druckanstieges durch Erfassung des Kontrollvolumendruckes über die Zeit,
- Auswertung und Generierung einer Meldung oder eines Alarms bei Überschreitung vorgegebener Druckanstiegswerte.

Es ist von Vorteil, dass Kontrollvolumen über einen Strömungswiderstand zu entlüften, wobei ein Partikelfilter vorgeschaltet ist, und der Differenzdruck zwischen Zwischenvolumendruck und Druck hinter dem Strömungswiderstand gemessen, und daraus zusätzlich der Verschmutzungsgrad des Filters ermittelt wird.

Im einrichtungsgemäßer Hinsicht besteht der Kern der Erfindung darin, dass zwischen einer ersten und einer zweiten Ventilstangendichtung konstruktiv ein Kontrollvolumen geschaffen ist, und dass dieses Kontrollvolumen mit mindestens einem Drucksensor und /oder Druckschalter drucküberwacht ist, und zur Ermittlung eines Leckagestromes mit einer Auswerteeinheit oder einen Stellungsregler logisch verschaltet ist.

Einrichtungsgemäß sind hierzu natürlich die Verwendung von Strömungswiderstand und Filter zum Entlüften oder entleeren des Kontrollvolumens von großem Vorteil.

Zur Ermittlung des Verschmutzungsgrades des Filters ist ein weiterer Drucksensor hinter dem Filter angeordnet, und zur Verschmutzungsgradermittlung wird der Differenzdruck zwischen dem Druck im Kontrollvolumen und dem Druck hinter dem Filter gemessen, wobei ggfs eine Aufforderung und/oder ein Signal zum Filterwechsel generierbar ist.

Vorteilhafterweise kann nun das Kontrollvolumen über ein Schaltventil entlüftbar bzw entleerbar ist, welches über einen Druckschalter betätigbar ist. Von Vorteil ist auch das Schaltventil als Druckbegrenzungsventil auszubilden.

Weiterhin kann nun das Schaltventil über eine Auswerteeinheit oder einen Stellungsregler angesteuert werden.

Das Schaltventilkann dabei als Wegeventil, insbesondere als 2/2-Wegeventil ausgestaltet sein.

Bei vorhandenen Schadstoffen im Arbeitsdruckmittel ist das Kontrollvolumen (30) in ein abgeschlossenen oder ein abschließbares Volumen hinein entlüftbar ist.

Bei Erreichen entsprechender Leckagestromgrenzwerte kann in vorteilhafter Ausgestaltung automatisch eine Aufforderung und/oder ein Signal zum Wechsel der Ventilstangendichtung generiert werden.

Wegen der sogar fernüberwachbaren Zustandsermittlung der Dichtung ist eine solche Einrichtung besonders vorteilhaft als fernüberwachbares Prozessventil einsetzbar.

Die Erfindung sowohl in verfahrensgemäßer sowie einrichtungsgemäßer Hinsicht ist in der Zeichnung dargestellt und nachfolgend näher erläutert.

Es zeigt:

Fig.1: Ventilstange mit Dichtung und Kontrolldichtung.

Fig.2: Funktionsweise A - Überwachung mit kontinuierlicher Öffnung des Kontrollvolumens.

Fig.3: Überwachung durch Beobachtung des Kontrolldruckes.

Fig.4: gemäß Figur 3, mit zeitweiser Entlüftung.

Fig.5: gemäß Figur 4, mit Ventiltyp "unbetätigt geschlossen".

Fig.6: Ersatzschaltbild mit Dichtungen und Durchflusswiderstand.

Fig.7: Ersatzschaltbild mit Dichtungen und 2/2-Wege-Auslassventil.

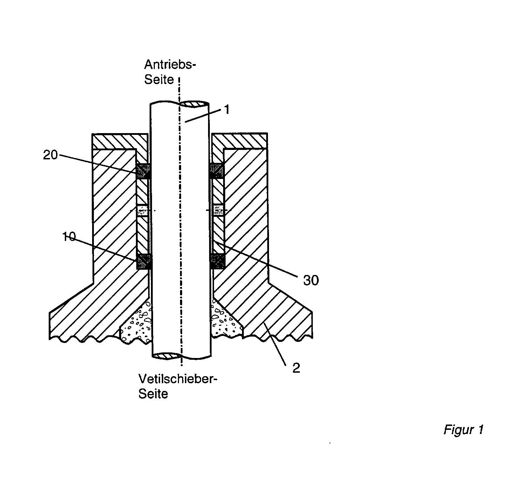

Figur 1 macht den grundlegenden Gedanken deutlich, der in beiden Verfahren bzw Vefahrensausgestaltungen verwirklicht ist. Zur Leckage-Überwachung bzw. zur Leckage-Detektion an Dichtungen und Packungen die zur Abdichtung der Gehäusedurchführung 2 der Ventilstange 1 an verfahrentechnischen Ventilen dienen, wird zuzüglich zur ersten Dichtung 10 eine zweite Dichtung 20 gleicher oder anderer Bauform, die "Kontroll-Dichtung" genannt wird, verwendet. Diese zweite Dichtung 20 dient ebenfalls der Abdichtung der Ventilstange 1 und ist in Reihe mit der ersten Dichtung 10 zu deren dem Systemdruck abgewandten Seite hin angeordnet.

Beide Dichtungen 10 und 20 schließen ein Volumen ein, welches als Kontroll-Volumen 30 bezeichnet wird. Abhängig von der Bauart des Prozessventils ist dieses Kontrollvolumen konstant oder in Grenzen veränderlich. Es wird vorausgesetzt, dass die zu überwachende Dichtung 10 gleich stark oder stärker bzw. schneller verschleißt, als die Kontrolldichtung 20. Im Falle einer auftretenden Leckage an der zu überwachenden Dichtung bzw. an beiden Dichtungen kommt es zu einem Druckanstieg im Kontroll-Volumen 30. Durch Verwendung von Drucksensoren oder Druckschaltern kann der Druckanstieg erfasst und mittels einer Intelligenz (z.B. Stellungsregler mit entsprechendem Steuerprogramm) interpretiert werden.

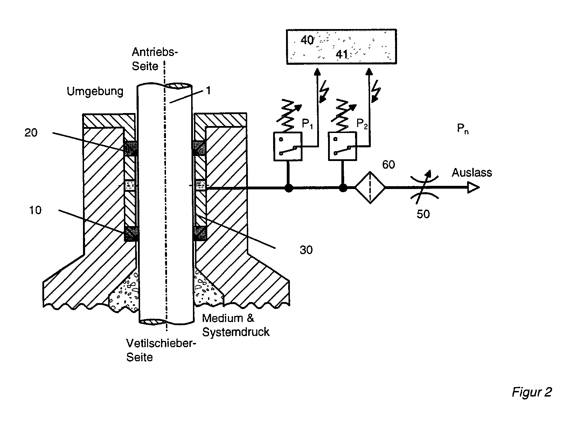

Abhängig von der zulässigen Leckagerate werden zwei Funktionsweisen unterschieden, von denen die erste in Figur 2 gezeigt wird.

Im Falle der Zulässigkeit einer gewissen - wenn auch geringen - Leckagerate kann das Kontrollvolumen 30 kontinuierlich entleert werden. Zur kontinuierlichen Entleerung wird das Kontrollvolumen über einen einmalig zu justierenden Strömungswiderstand (z.B.: Drossel, Spalt oder Blende) zur Umgebung hin oder in einen Auffang-Behälter hinein geöffnet. Vor dem Widerstand kann ein Filter vorgesehen werden, um eine Verstopfung durch im Medium mitgeführte Partikel oder andere Verfestigungen zu vermeiden.

Die verschlissenen Dichtungen stellen aus strömungstechnischer Sicht wiederum einen Widerstand dar. Durch den Druckabfall über die zu überwachende Dichtungen kommt es zu einem Leckagestrom, welcher detektiert werden soll. Der Leckagestrom in das Kontroll-Volumen 30 wiederum führt zu einem Druckanstieg in diesem Volumen. Der Druckanstieg führt dazu, dass sich ebenfalls Leckageströme sowohl über die zweite Dichtung als auch über den zusätzlichen Widerstand einstellen. Durch richtige Abstimmung d.h. Einstellung des technischen Widerstandes ist es möglich, den bedeutend größeren Anteil der Strömung über diesen technischen Widerstand zu leiten. Abhängig von dessen Durchflusscharakteristik und den Eigenschaften des verwendeten Mediums stellt sich im Kontrollvolumen 30 ein Druck ein, der größer als der Umgebungsdruck und kleiner als der Systemdruck ist. Das Auftreten eben dieses Druckes wird über Sensoren P1 und P2 detektiert und ist ein notwendiges Indiz für einen zuvor per Justage des technischen Widerstands gewählten Leckagestrom.

Durch die Abstimmung eines Druckniveaus und des Strömungswiderstandes kann eine Leckagerate eingestellt werden, die zwischen "Gut-Zustand" und unzulässigem "Fehler-Zustand" liegt. Durch Verwendung von zwei und mehr Druckschaltern $P_n$ oder einem Drucksensor ist es weiterhin möglich, unterschiedlich stark ausgeprägte Leckagen zu unterscheiden.

Vor der Auslassdrossel kann ein Filter vorgesehen werden, um Verunreinigungen, z.B. aus dem Medium oder auf Grund von Abrieb, die zu einer Verstopfung des Widerstandes führen könnten, vorzubeugen. Der Zustand des Filters kann gegebenenfalls auch durch einen Differenz-Druckschalter überwacht werden.

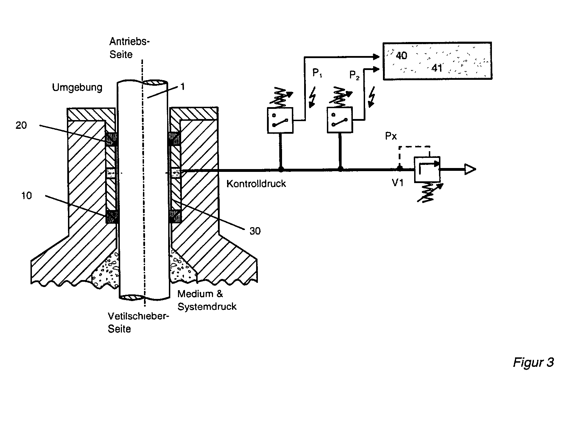

Figur 3 zeigt eine andere Funktionsweise, und zwar die Überwachung mit zeitweiser oder zwischenzeitlicher d.h. diskontinuierlicher Öffnung des Kontrollvolumens 30.

Im Falle der Unzulässigkeit permanenter Leckageraten wird das Kontrollvolumen 30 über ein Druckbegrenzungsventil PV1, falls notwendig, nur auf Befehl des Bedienpersonals entleert.

Im Anschluss an die Entleerung erfolgt im Falle einer Leckage über die zu kontrollierende Dichtung ein Druckanstieg im Kontrollvolumen, der zur Identifikation des Leckagestromes genutzt werden kann. Dabei können folgende Varianten bezüglich der Komponentenauswahl und der Vorgehensweise unterschieden werden.

**Variante1 a**

Das Kontrollvolumen 30 wird mit einem Druckbegrenzungsventil PV1 mit ausreichender und bekannter Hysterese versehen. Bei Erreichen des justierten Öffnungsdruckes wird das Kontrollvolumen 30 solange entleert, bis sich der niedrigere Schließdruck eingestellt hat.

Mit zwei Druckschaltern oder einem Drucksensor werden die Schaltpunkte erfasst und an einen Stellungsregler weitergeleitet.

Im Stellungsregler 41 kann eine Auswerteeinheit 40 integriert sein, die die Signale der Druckschalter oder des Drucksensors interpretiert. In Abhängigkeit von der Schließzeit, dem Kontrollvolumen, dem Druck im Kontrollvolumen und den Zustandsgleichungen des Arbeitsmittels wird ein Leckagestrom ermittelt.

Der ermittelte Leckagestrom wird mit einem zulässigen Leckagestrom verglichen. Im Falle einer Überschreitung eines zulässigen Leckagestromes wird von der Auswerteeinheit ein Alarm generiert und an eine übergeordnete Überwachungseinheit (z.B. ein Leitsystem) weitergeleitet. Der auftretende Alarm kann auch direkt außen am Stellungsregler angezeigt werden.

**Variante1 b**

Hierzu wird am Kontrollvolumen ein 2/2-Wege-Schaltventil V1 vom Typ "unbetätigt geschlossen" mit einem Auslass zur Umgebung hin oder in einen Auffangbehälter vorgesehen. Das Schaltventil ist als Sitzventil mit einer ausreichenden Dichtigkeit auszuführen.

Das Schaltventil kann auf drei verschiedene Weisen betätigt werden:

1. Über einen Druckschalter mit ausreichender und bekannter Hysterese oder Zweipunktschalter.
2. Über zwei Druckschalter, die jeweils auf einen bekannten Öffnungs- und Schließdruck justiert sind.
3. Über einen Druckschalter mit nachgeschaltetem Zeitgeber (Ausschaltverzögerung).

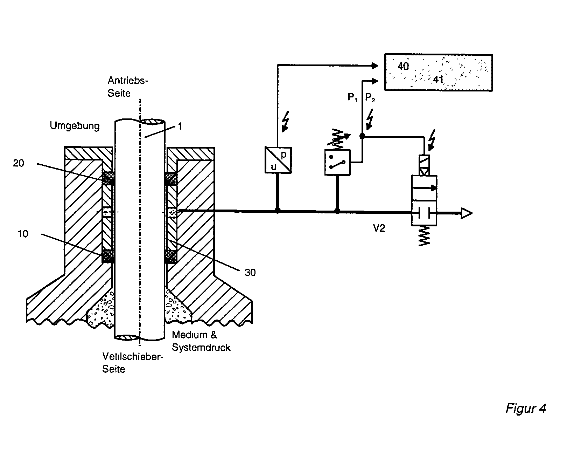

Gemäß Figur 4 kann daneben zusätzlich ein Drucksensor verwendet werden, der das Drucksignal zum Stellungsregler weiterleitet.
Im Stellungsregler befindet sich eine Auswerteeinheit, die die Signale vom Druckschalter und/oder dem Drucksensor interpretiert. In Abhängigkeit von der Schließzeit, dem Kontrollvolumen, dem Druck im Kontrollvolumen und den Zustandsgleichungen des Arbeitsmittels wird ein Leckagestrom ermittelt.
Der ermittelte Leckagestrom wird mit einem zulässigen Leckagestrom verglichen. Im Falle einer Überschreitung eines zulässigen Leckagestromes wird von der Auswerteeinheit ein Alarm generiert und an eine übergeordnete Überwachungseinheit (z.B. ein Leitsystem) weitergeleitet. Der auftretende Alarm kann auch direkt außen am Stellungsregler angezeigt werden.

**Variante 2**

Die Anordnung ist vergleichbar mit Variante 1b jedoch wird das Schaltventil von einem Stellungsregler mit einem entsprechendem Steuerprogramm betätigt. Ein Prüfzyklus wird

- regelmäßig (etwa jeden Tag, jede Woche, jeden Monat, etc.),
- auf Anforderung eines übergeordneten Leitsystems
- oder einmalig, etwa auf Grund eines anderen Ereignisses, gestartet.

Der Prüfzyklus sieht wie folgt aus:

1.) Öffnen des 2/2-Wege-Schaltventils und Entlüftung/Entleerung des Kontrollvolumens (dabei gegebenenfalls Auffangen des Mediums).
2.) Verschließen des Kontrollvolumens und Start der Kontrollzeit.
3.a) Zu überwachende Dichtung ist funktionsfähig: es erfolgt kein Druckanstieg.
3.b) Zu überwachende Dichtung ist leck: es erfolgt ein Druckanstieg.
4.) Im Falle eines Druckanstieges wird die Zeit bis zum Erreichen eines definierten Druckwertes ermittelt (z.B. über einen Druckschalter (nicht dargestellt) oder Grenzwertüberwachung im Stellungsregler) oder die

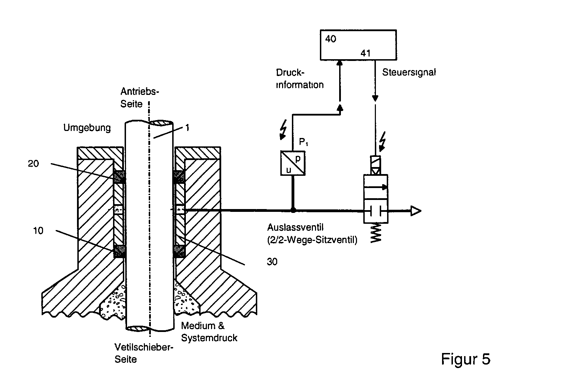

Druckanstiegs-Geschwindigkeit (z.B. über eine Drucksensor) gemessen. Aus dem Zeitintervall, welches zwischen dem Verschluss des Kontrollvolumens und dem Erreichen eines Kontrolldruckes verstreicht, sowie der Höhe des Kontrolldrucks lässt sich in Abhängigkeit der Eigenschaften des Mediums ein Maß für die Leckagerate über die zu überwachende Dichtung bestimmen. Die gleiche Größe kann auch aus der Druckanstiegsgeschwindigkeit ermittelt werden.
Bei Eintreten einer zuvor festgelegten Leckagerate kann sowohl eine Fehlermeldung erfolgen als auch der Prüfzyklus bis zur ausstehenden Wartung bzw. Reparatur unterbrochen bzw. unterbunden werden. Letzteres verhindert soweit möglich weitere Leckagen.
Das auslösende Ereignis für eine Prüfzyklus kann gegebenenfalls auch der erste Druckanstieg im Kontrollvolumen selbst sein. Ebenfalls ist ein sich wiederholender Druckanstieg im Kontrollvolumen bis auf ein gewähltes Druckniveau als Neustart eines Prüfzyklus denkbar, was im Falle einer einsetzenden Leckage zu einem permanenten Wiederholung des Prüfzyklus führt.
Verkürzt sich die Zykluszeit unterhalb eines zulässigen Zeitintervalls, so kann wiederum eine Fehlermeldung und eine endgültige Unterbrechung des Prüfzyklus erfolgen, wie dies in Figur 5 zu sehen ist..
Die Überwachung des Druckniveaus kann alternativ auch beispielsweise durch einen Zweipunkt-Druckschalter mit nachgeschalteter Logik erfolgen.

**Grundlagen zur Berechung der Leckage aufgrund des Druckanstieges im Kontrollvolumen**

**Kontinuierliche Messung**

Unter der Vorraussetzung, dass die verwendeten statischen Dichtungen ideal dicht sind, stellt das Kontrollvolumen ein offenes System mit drei Anbindungen zu seiner Umgebung dar. Die drei Anbindungen sind

1. die zu überwachende Dichtung (1), zwischen dem abzudichtenden Medium und dem Kontrollvolumen,
2. die zusätzliche Dichtung (2), zwischen dem Kontrollvolumen und der Umgebung und
3. der bekannte Durchflusswiderstand (3), zwischen dem Kontrollvolumen und der Umgebung.

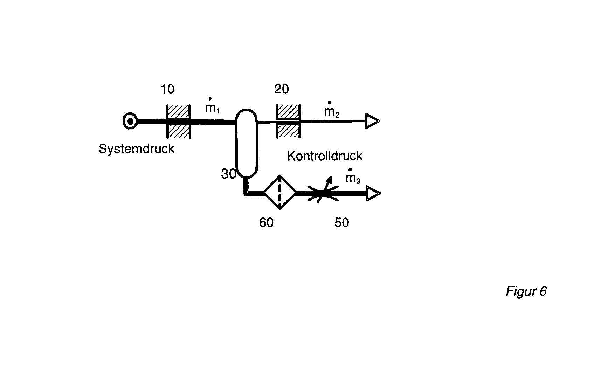

Hierzu zeigt Figur 6 ein Ersatzschaltbild mit zwei Dichtungen und einem Durchflußwiderstand. Der System-

druck $p_s$ ist höher als der Druck $p_k$ im Kontrollvolumen ist und letzterer ist ebenfalls höher als der Umgebungsdruck $p_u$:

$$p_s > p_k > p_u \qquad\qquad 0.1$$

Der Massenstrom aufgrund der Leckage über die zu überwachende Dichtung 1 teilt sich in jeweils einen Massenstrom über die Dichtung 2 und über den Durchflusswiderstand auf. Der Durchflusswiderstand an der Dichtung 2 wird als etwa gleich oder eher größer als der von Dichtung 1 angenommen (siehe Kapitel 3). Der justierte Kontrolldruck im Kontrollvolumen liegt unterhalb 10% des Systemdrucks. Somit ergibt sich - selbst im Falle gleicher Wiederstände von Dichtung 1 und Dichtung 2 - ein geringerer Massenstrom über Dichtung 2 als über Dichtung 1. Aufgrund der Gültigkeit des Kontinuitätsgesetzes stellt sich bei einem konstanten Systemdruck ebenfalls ein konstanter Kontrolldruck ein. Dieser Zustand ist als stationärer Zustand zu betrachten.

$$\dot{m}_1 = \dot{m}_2 + \dot{m}_3 \qquad\qquad 0.2$$

Der verbleibende Massenstrom über den bekannten Durchflusswiderstand ergibt sich wie folgt:

$$\dot{m}_3 = \dot{m}_1 - \dot{m}_2 \qquad\qquad 0.3$$

Für den Fall dass

$$p_k \ll p_s \text{ und damit } \dot{m}_2 \ll \dot{m}_1 \qquad\qquad 0.4$$

ist, folgt

$$\dot{m}_3 \approx \dot{m}_1 \qquad\qquad 0.5.$$

Der Kontrolldruck ist möglichst so zu wählen, dass

$$\dot{m}_2 \leq 10\% \cdot \dot{m}_1 \qquad\qquad 0.6$$

ist und damit

$$\dot{m}_3 \geq 90\% \cdot \dot{m}_1 \qquad\qquad 0.7.$$

Im Umkehrschluss kann in diesem Fall aus dem Kontrolldruck auf den Leckagemassenstrom geschlossen werden. Abhängig vom Medium und dem Durchflussgesetz des Durchflusswiderstandes gilt:

$$\dot{m}_1 = \frac{\dot{m}_3(p_k, T_k, \text{Durchflusswiderstand C,b,etc.})}{0{,}9} \qquad\qquad 0.8.$$

Für eine definierte maximal zulässige Leckagerate $\dot{m}_{1,zul}$ ist eine Alarmierung gegeben für den Fall, dass

$$\dot{m}_1 \geq \dot{m}_{1,zul} \qquad\qquad 0.9$$

gilt, gegeben.

**Gasförmige Medien**

Stellvertretend für die Vielzahl möglicher gasförmiger Medien, wird im Folgenden beispielhaft die Leckagerate für das Gas Luft beschrieben:

Für einen blendenförmigen Durchflusswiderstand (3) mit dem kritischen Druckverhältnis b des Widerstandes und dem Leitwert C (entspricht dem Durchflussbeiwert) gilt, dass dieser für $b \leq \frac{p_u}{p_k} \leq 1$ unterkritisch durchströmt wird:

$$\dot{m} = C_{\text{Widerstand}} \cdot p_k \cdot \rho_0 \cdot \sqrt{\frac{T_0}{T_k}} \cdot \sqrt{\left(1 - \left(\frac{\frac{p_u}{p_k} - b}{1-b}\right)^2\right)} \qquad 0.10$$

und für $0 \leq \frac{p_u}{p_k} < b$ überkritisch durchströmt wird

$$\dot{m} = C_{\text{Widerstand}} \cdot p_k \cdot \rho_0 \cdot \sqrt{\frac{T_o}{T_k}} \qquad 0.11$$

Der Leitwert C kann messtechnisch ermittelt werden oder über die Geometrie des engsten Querschnittes $A_2$ und die zu erwartende Einschnürung $\alpha_D$ berechnet werden:

$$C = \frac{\alpha_D A_2 \Psi_{\max}\sqrt{2R_{L,0}T_0}}{p_0} \qquad 0.12$$

Ist beispielsweise der Systemdruck 10 bar$_{rel}$ und beträgt der gewählte Kontrolldruck 1 bar$_{rel}$, so ergibt sich für eine Drosselbohrung mit d = 0,1 mm mit einer Einschnürung $\alpha_D = 0,6$ sowie $\Psi_{\max} = 0,484$ der Leitwert zu:

$$C = \frac{\alpha_D A_2 \Psi_{\max}\sqrt{2R_{L,0}T_0}}{p_0} = 0,05612 \; \frac{\text{NL}}{\text{min} \cdot \text{bar}} \qquad 0.13.$$

Aufgrund des Druckverhältnisses

$$0 \leq \frac{p_u}{p_k} = \frac{1 \; bar}{2 \; bar} = 0,5 < b = 0,528 \qquad 0.14$$

liegt eine überkritische Durchströmung vor, so dass der Luftmassenstrom

$$\dot{m}_3 = C_{\text{Widers}\tan d} \cdot p_k \cdot \rho_0 \cdot \sqrt{\frac{T_0}{T_k}} = 0,0022074 \; \frac{g}{s} \qquad 0.15$$

bzw. der Normvolumenstrom

$$\dot{V}_3 = 112,24 \frac{\text{Ncm}^3}{\text{min}} \qquad 0.16$$

betragen.
Demnach läge eine Leckage von

$$\dot{V}_1 = \frac{\dot{V}_3}{0,9} = 124,71 \ \frac{\text{Ncm}^3}{\text{min}} \qquad\qquad 0.17$$

vor.

**Kompressible Flüssigkeiten**

Bei Flüssigkeiten ist zu unterscheiden, welcher Durchflussform an den jeweiligen Dichtungen (1+2) und dem Durchflusswiderstand (3) auftritt. Im Wesentlichen sind zwei Arten von Widerständen zu unterscheiden, die Blende und der Spalt. Für einen blendenförmigen, also scharfkantigen Widerstand gilt

$$Q = \alpha_D \cdot A \cdot \sqrt{\frac{2}{\rho}} \cdot \sqrt{\Delta p} \qquad\qquad 0.18$$

Entsprechend gilt für einen spaltförmigen Widerstand mit einem kreisförmigem Querschnitt:

$$Q = \frac{\pi \cdot r^4}{8 \cdot \eta \cdot l} \cdot \Delta p \qquad\qquad 0.19$$

beziehungsweise mit rechteckigem Querschnitt

$$Q = \frac{b \cdot h^3}{12 \cdot \eta \cdot l} \cdot \Delta p \qquad\qquad 0.20$$

Die Druckdifferenz $\Delta p$ ergibt sich hierbei aus

$$\Delta p = p_k - p_u \qquad\qquad 0.21$$

Blendenförmige Querschnitte sind in diesem Fall zu bevorzugen, da das zugehörige Durchflussverhalten keine Temperaturabhängigkeit aufweist.
Der Leckage-Massenstrom über die zu überwachende Dichtung errechnet sich beispielweise mit der Dichte p des Medium für einen blendenförmigen Widerstand (3) zu:

$$\dot{m}_1 = \frac{\dot{m}_3}{0,9} = \frac{\alpha_D \cdot A \sqrt{\frac{2}{\rho}} \cdot \sqrt{p_k - p_u}}{0,9} \qquad\qquad 0.22$$

**Diskontinuierliche Messung**

Unter der Vorraussetzung, dass die verwendeten statischen Dichtungen ideal dicht sind, stellt das Kontrollvolumen für eine diskontinuierliche Messung ebenfalls ein offenes System mit drei Anbindungen zu seiner Umgebung dar. Die drei Anbindungen sind

1. die zu überwachende Dichtung (1), zwischen dem abzudichtenden Medium und dem Kontrollvolumen,
2. die zusätzliche Dichtung (2), zwischen dem Kontrollvolumen und der Umgebung und
3. das zeitweilig geöffnete 2/2-Wege-Auslassventil.

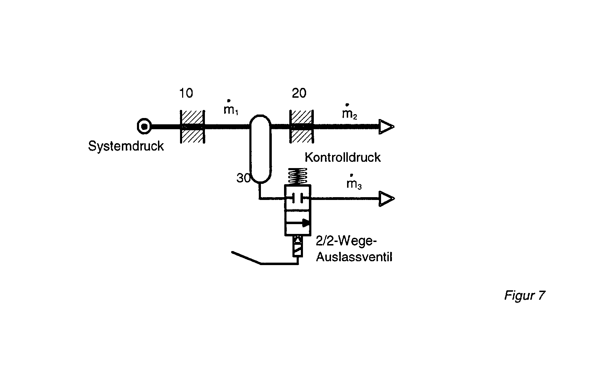

Figur 7 zeigt ein Ersatzschaltbild für ein Kontrollsystem mit zwei Dichtungen und einem 2/2-Wege-Auslassventil.
Zur Ermittlung der Leckagerate werden zwei zeitlich aufeinander folgende Zustände des Fluids im Kontrollvolumen betrachtet, für welche

$$p_k(t_2) > p_k(t_1) \qquad\qquad 0.23$$

sowie

$$t_2 > t_1 \Rightarrow dt = t_2 - t_1 \qquad\qquad 0.24$$

gilt.

Unter der Voraussetzung, dass das Volumen und die Eigenschaften des Fluids bekannt sind sowie dass die zweite Dichtung weniger oder vergleichbar stark verschleißt wie die erste Dichtung, kann man den Leckagestrom ermitteln. Dazu bildet man die Differenz der beiden Massen zu den jeweiligen Zeitpunkten $t_1$ und $t_2$ und bezieht diese auf die Intervallzeit dt:

$$\dot{m}_1 - \dot{m}_2 = \frac{\Delta m_k}{dt} = \frac{m_k(t_2) - m_k(t_1)}{t_2 - t_1} \qquad\qquad 0.25$$

Unter der Annahme, dass

$$p_k \ll p_s \text{ und damit } \dot{m}_2 \ll \dot{m}_1 \qquad\qquad 0.26$$

ist, ergibt sich der Leckagemassenstrom über die zu überwachende Dichtung

$$\dot{m}_1 = \frac{\Delta m_k}{dt} = \frac{m_k(t_2) - m_k(t_1)}{t_2 - t_1} \qquad\qquad 0.27$$

ist.

**Gasförmige Medien**

Ebenfalls stellvertretend für die Vielzahl möglicher gasförmiger Medien, wird im Folgenden beispielhaft die Leckagerate für das Gas Luft beschrieben:

Gemäß der Gasgleichung für reelle Gase gilt für eine eingeschlossene Luftmasse m in einem Volumen V bei einer Temperatur T und dem Druck p Luft und der Gaskonstante R:

$$p \cdot V = m \cdot R \cdot T \cdot Z \qquad\qquad 0.28$$

Im Falle eines idealen Gases als welches Luft in einem bestimmten Druck und Temperaturbereich betrachtet werden kann, gilt $Z = 1$.

Demnach lässt sich die Masse des Luftvolumens berechnen:

$$m_k = \frac{p_k \cdot V_k}{R \cdot T_k} \qquad\qquad 0.29$$

Die Massenänderung während der Zeitspanne dt beträgt,

$$\Delta m_k = m_k(t_2) - m_k(t_1) = \frac{p_k(t_2) \cdot V_k}{R \cdot T_k(t_2)} - \frac{p_k(t_1) \cdot V_k}{R \cdot T_k(t_1)} \qquad\qquad 0.30$$

oder für den Fall, dass $T_k(t_1) = T_k(t_2)$ ist, vereinfacht:

$$\Delta m_k = \frac{\Delta p_k \cdot V_k}{R \cdot T_k}$$

0.31.

Daraus ergibt sich der Massenstrom über die zu überwachende Dichtung unter der Annahme, dass

$$p_k \ll p_s \text{ und damit } \dot{m}_2 \ll \dot{m}_1$$

0.32

ist, zu

$$\dot{m}_1 \approx \frac{\Delta m_k}{dt} = \frac{\Delta p_k}{dt} \frac{V_k}{R \cdot T_k}$$

0.33.

**Kompressible Flüssigkeiten**

Bei Verwendung eines kompressiblen Fluids (Wasser, Öl, etc.) mit dem Kompressionsmodul $E_{fluid}$ kann man über den Druckgradienten auf Leckagestrom schließen.

Die Kapazität des Kontrollvolumens kann über das Volumen $V_k$ und den Kompressionsmodul berechnet werden:

$$C_H = \frac{V_k}{E_{fluid}}$$

0.34.

Im Kontrollvolumen ist allgemein die zeitliche Änderung des Druckes proportional zur Summe der zu- bzw. abfließenden Volumenströme:

$$\dot{p}_k = \frac{1}{C_H} \cdot \sum_i Q_i = \frac{1}{C_H} \cdot (Q_1 - Q_2)$$

0.35.

Nun kann man die zeitlich Änderung des Druckes bezogen auf das Zeitintervall dt mitteln, so dass man erhält:

$$\bar{\dot{p}}_k = \frac{p_k(t2) - p_k(t1)}{dt}$$

0.36.

Unter der Annahme, dass

$$p_k \ll p_s \text{ und damit } Q_1 \ll Q_2$$

0.37

gilt, ergibt sich der Leckagestrom über die zu überwachende Dichtung

$$Q_1 \approx C_H \cdot \frac{\Delta p_k}{dt}$$

0.38

sowie der Leckagemassenstrom zu

$$\dot{m}_1 \approx \rho_{fluid} \cdot C_H \cdot \frac{\Delta p_k}{dt} = \rho_{fluid} \cdot C_H \cdot \frac{p_k(t2) - p_k(t1)}{dt}$$

0.39.

**Patentansprüche**

1.  Verfahren zur Ermittlung von Leckagen an der Dichtung eines Ventils bzw einer Ventilsstange, insbesondere eines Prozessventils,
    **dadurch gekennzeichnet,**
    **dass** zur Ermittlung der Leckage der Druck ggfs in Abhängigkeit von der Zeit in einem Kontrollvolumen zwischen einer ersten und einer zweiten Ventilstangendichtung ermittelt und daraus der Leckagestrom berechnet wird.

2.  Verfahren nach Anspruch 1,
    **dadurch gekennzeichnet,**
    **dass** aus dem Wert des Leckagestrom auf die Dichtigkeit der Dichtung geschlossen wird, und so ein Dichtungswechselzeitpunkt ermittelt wird.

3.  Verfahren nach Anspruch 2,
    **dadurch gekennzeichnet,**
    **dass** das Kontrollvolumen diskontinuierlich geöffnet bzw entleert und dann wieder geschlossen und sodann der Druckanstieg im Kontrollvolumen gemessen wird.

4.  Verfahren nach Anspruch 3,
    **dadurch gekennzeichnet,**
    **dass** das Kontrollvolumen druckbegrenzt wird, und bei einem oberen Druckwert entleert wird, solange bis sich ein niedriger Schließdruck eingestellt hat.

5.  Verfahren nach Anspruch 3,
    **dadurch gekennzeichnet,**
    **dass** das Kontrollvolumen über ein druckschalterbetätigtes Schaltventil entlüftet bzw. entleert wird, und sodann in Abhängigkeit zur Schließzeit, zum Druck im Kontrollvolumen und den Zustandsgleichungen des Arbeitsmittels ein Leckagestrom ermittelt wird.

6.  Verfahren nach Anspruch 4,
    **dadurch gekennzeichnet,**
    **dass** ein oberer Druckwert und ein niedriger Schließdruck durch Druckschalter oder durch einen Drucksensor erfasst werden, und sodann in Abhängigkeit zur Schließzeit, zum Druck im Kontrollvolumen und den Zustandsgleichungen des Arbeitsmittels ein Leckagestrom ermittelt wird.

7.  Verfahren nach einem der vorhergehenden Ansprüche,
    **dadurch gekennzeichnet,**
    **dass** das Schaltventil über ein Steuerprogramm so angesteuert wird, dass wenn ein Prüfungszyklus eingeleitet wird, die Einzelschritte des Prüfzyklusses automatisch ablaufen.

8.  Verfahren nach Anspruch 7,
    **dadurch gekennzeichnet,**
    **dass** der Prüfungszyklus folgende Schritte enthält,

    -   Öffnen des Schaltventiles und Entlüftung des Kontrollvolumens,
    -   Verschließen des Kontrollvolumens und Start der Kontrollzeit,
    -   Ermittlung eines Druckanstieges durch Erfassung des Kontrollvolumendruckes über die Zeit,
    -   Auswertung und Generierung einer Meldung oder eines Alarms bei Überschreitung vorgegebener Druckanstiegswerte.

9.  Verfahren nach einem der vorhergehenden Ansprüche,
    **dadurch gekennzeichnet,**
    **dass** Kontrollvolumen über einen Strömungswiderstand entlüftet wird, dem ein Partikelfilter vorgeschaltet ist, und der Differenzdruck zwischen Zwischenvolumendruck und Druck hinter dem Strömungswiderstand gemessen, und daraus zusätzlich der Verschmutzungsgrad des Filters ermittelt wird.

10. Einrichtung zur Ermittlung von Leckagen an der Dichtung eines Ventils bzw einer Ventilsstange, insbesondere eines Prozessventils,

**dadurch gekennzeichnet,**
**dass** zwischen einer ersten und einer zweiten Ventilstangendichtung (10, 20) konstruktiv ein Kontrollvolumen (30) geschaffen ist, und dass dieses Kontrollvolumen (30) mit mindestens einem Drucksensor und /oder Druckschalter (P1, P2, ..., Pn) drucküberwacht ist, und zur Ermittlung eines Leckagestromes mit einer Auswerteeinheit (40) oder einen Stellungsregler (41) logisch verschaltet ist.

11. Einrichtung nach Anspruch 6,
**dadurch gekennzeichnet,**
**dass** das Kontrollvolumen (30) über einen Strömungswiderstand (50) entlüftbar bzw entleerbar ist.

12. Einrichtung nach Anspruch 7,
**dadurch gekennzeichnet,**
**dass** dem Strömungswiderstand (50) ein Filter (60) vorgeschaltet ist.

13. Einrichtung nach Anspruch 8,
**dadurch gekennzeichnet,**
**dass** ein weiterer Drucksensor (Pn) hinter dem Filter (60) angeordnet ist, und zur Verschmutzungsgradermittlung der Differenzdruck zwischen dem Druck im Kontrollvolumen (30) und dem Druck hinter dem Filter (60) gebildet bzw gemessen wird, wobei ggfs eine Aufforderung und/oder ein Signal zum Filterwechsel generierbar ist.

14. Einrichtung nach einem der vorhergehenden Ansprüche,
**dadurch gekennzeichnet,**
**dass** das Kontrollvolumen (30) über ein Schaltventil (V1) entlüftbar bzw entleerbar ist, welches über einen Druckschalter (Px) betätigbar ist.

15. Einrichtung nach einem der vorhergehenden Ansprüche,
**dadurch gekennzeichnet,**
**dass** das Kontrollvolumen (30) über ein Schaltventil (V1) entlüftbar bzw entleerbar ist, welches über einen Druckbegrenzungsventil betätigbar ist.

16. Einrichtung nach einem der vorhergehenden Ansprüche,
**dadurch gekennzeichnet,**
**dass** das Schaltventil (V1) über eine Auswerteeinheit (40) oder einen Stellungsregler (41) ansteuerbar ist.

17. Einrichtung nach einem der vorhergehenden Ansprüche,
**dadurch gekennzeichnet,**
**dass** das Schaltventil (V1) ein Wegeventil ist.

18. Einrichtung nach Anspruch 16,
**dadurch gekennzeichnet,**
**dass** das Schaltventil (V1) ein 2/2-Wegeventil ist.

19. Einrichtung nach einem der vorhergehenden Ansprüche,
**dadurch gekennzeichnet,**
**dass** das Kontrollvolumen (30) in ein abgeschlossenen oder ein abschließbares Volumen hinein entlüftbar ist.

20. Einrichtung nach einem der vorhergehenden Ansprüche,
**dadurch gekennzeichnet,**
**dass** bei Erreichen entsprechender Leckagestromgrenzwerte automatisch eine Aufforderung und/oder ein Signal zum Wechsel der Ventilstangendichtung generierbar ist.

21. Verwendung einer Einrichtung nach einem oder mehreren der Ansprüche 10 bis 19, als ein fernüberwachbares Prozessventil.

Antriebs-
Seite

20

1

10

30

2

Vetilschieber-
Seite

Figur 1

Antriebs-
Seite

Umgebung

1

20

10

30

40
41

$P_1$    $P_2$    $P_n$

60    Auslass

50

Medium &
Systemdruck

Vetilschieber-
Seite

*Figur 2*

Figur 3

Figur 4

Figur 5

*Figur 6*

10   $\dot{m}_1$          20        $\dot{m}_2$

Systemdruck

Kontrolldruck

30                        $\dot{m}_3$

2/2-Wege-
Auslassventil

*Figur 7*

**Europäisches Patentamt**

# EUROPÄISCHER RECHERCHENBERICHT

Nummer der Anmeldung

EP 00 12 7903

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 573 344 A (EZEKOYE LEVI I) 4. März 1986 (1986-03-04) | 1,2,10 | G01M3/28 |
| Y | * Spalte 1, Zeile 7-13 * | 19 | |
| A | * Spalte 1, Zeile 29-35 * | 7,11,20, 21 | |
| | * Spalte 2, Zeile 9-15 * * Spalte 2, Zeile 48-51 * * Spalte 3, Zeile 28-41 * * Spalte 3, Zeile 60 - Spalte 4, Zeile 3 * * Spalte 5, Zeile 4-27 * * Spalte 5, Zeile 44-51 * * Spalte 5, Zeile 63 - Spalte 6, Zeile 28 * * Abbildung 1 * ---- | | |
| A | US 3 827 285 A (GROVE M) 6. August 1974 (1974-08-06) * Spalte 1, Zeile 13-18 * * Spalte 2, Zeile 37-44 * * Spalte 5, Zeile 1-23 * * Abbildungen 1-4 * ---- | 1,10,20, 21 | |
| Y | GB 1 097 339 A (NASH FRAZER LTD) 3. Januar 1968 (1968-01-03) | 19 | **RECHERCHIERTE SACHGEBIETE (Int.Cl.7)** G01M |
| A | * Seite 1, Zeile 54-69 * | 1,2,10, 21 | |
| | * Seite 4, Zeile 53-70 * * Abbildung 2 * ---- | | |
| A | EP 0 580 524 A (EASTMAN KODAK CO) 26. Januar 1994 (1994-01-26) * Spalte 2, Zeile 30-44 * * Spalte 5, Zeile 38-47 * * Abbildungen 2,3 * ---- | 1,10,20, 21 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 20. Juni 2001 | Paquay, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie,übereinstimmendes Dokument

EPO FORM 1503 03.82 (P04C03)

**Europäisches Patentamt**

## EUROPÄISCHER RECHERCHENBERICHT

Nummer der Anmeldung

EP 00 12 7903

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 811 663 A (KIM JEONGSIK) 22. September 1998 (1998-09-22) <br> * Spalte 1, Zeile 7-9 * <br> * Spalte 1, Zeile 60-65 * <br> * Spalte 2, Zeile 43-53 * <br> * Spalte 3, Zeile 19-21 * <br> * Abbildung 2 * <br> ---- | 1,10,19 | |
| A | US 4 043 355 A (CERRUTI ROGER ANTHONY ET AL) 23. August 1977 (1977-08-23) <br> * Spalte 1, Zeile 6-16 * <br> * Spalte 2, Zeile 12-32 * <br> * Spalte 2, Zeile 49-51 * <br> * Spalte 2, Zeile 64 – Spalte 3, Zeile 21 * <br> * Spalte 6, Zeile 17-33 * <br> * Abbildung 1 * <br> ----- | 1,10,14, 15,19 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| DEN HAAG | 20. Juni 2001 | Paquay, J |

**ANHANG ZUM EUROPÄISCHEN RECHERCHENBERICHT
ÜBER DIE EUROPÄISCHE PATENTANMELDUNG NR.**

EP 00 12 7903

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-06-2001

| Im Recherchenbericht angeführtes Patentdokument | Datum der Veröffentlichung | Mitglied(er) der Patentfamilie | Datum der Veröffentlichung |
|---|---|---|---|
| US 4573344 A | 04-03-1986 | BE 902703 A | 19-12-1985 |
| | | ES 544070 D | 01-12-1986 |
| | | ES 8701943 A | 01-03-1987 |
| | | FR 2566091 A | 20-12-1985 |
| | | GB 2160662 A,B | 24-12-1985 |
| | | IT 1185583 B | 12-11-1987 |
| | | JP 1645966 C | 13-03-1992 |
| | | JP 3010894 B | 14-02-1991 |
| | | JP 61013128 A | 21-01-1986 |
| US 3827285 A | 06-08-1974 | US 3835695 A | 17-09-1974 |
| | | AU 449102 B | 06-06-1974 |
| | | AU 5176373 A | 06-06-1974 |
| | | CA 1004092 A | 25-01-1977 |
| | | DE 2317301 A | 18-10-1973 |
| | | FR 2178861 A | 16-11-1973 |
| | | GB 1378627 A | 27-12-1974 |
| | | IT 990528 B | 10-07-1975 |
| | | JP 894028 C | 30-01-1978 |
| | | JP 49010785 A | 30-01-1974 |
| | | JP 52022555 B | 17-06-1977 |
| | | NL 7301786 A,B | 09-10-1973 |
| GB 1097339 A | 03-01-1968 | KEINE | |
| EP 0580524 A | 26-01-1994 | US 5345812 A | 13-09-1994 |
| | | JP 6066670 A | 11-03-1994 |
| US 5811663 A | 22-09-1998 | KR 120092 B | 30-10-1997 |
| US 4043355 A | 23-08-1977 | CA 1070181 A | 22-01-1980 |
| | | GB 1521660 A | 16-08-1978 |
| | | ZA 7703631 A | 30-05-1978 |

EPO FORM P0461

Für nähere Einzelheiten zu diesem Anhang : siehe Amtsblatt des Europäischen Patentamts, Nr.12/82